# EUROPÄISCHE PATENTSCHRIFT

(11) **EP 0 689 640 B1**
(45) Veröffentlichungstag und Bekanntmachung des Hinweises auf die Patenterteilung: **28.08.1996**
(21) Anmeldenummer: 94908943.7
(22) Anmeldetag: 01.03.1994
(51) Int. Cl.: F01N 7/00

(54) **VERFAHREN ZUR ÜBERPRÜFUNG DER KONVERTIERUNGSFÄHIGKEIT EINES KATALYSATORS**
PROCESS FOR CHECKING THE CONVERSION CAPABILITY OF A CATALYST
PROCEDE DE CONTROLE DE LA CAPACITE DE CONVERSION D'UN CATALYSEUR

(30) Priorität: 19.03.1993 DE 4308894
(43) Veröffentlichungstag der Anmeldung: 03.01.1996
(73) Patentinhaber: SIEMENS AKTIENGESELLSCHAFT, 80333 München (DE)
(72) Erfinder: WIER, Manfred Dr., D-93173 Wenzenbach (DE); TREINIES, Stefan, D-93055 Regensburg (DE); KETTERER, Alexander, D-93047 Regensburg (DE)
(86) Internationale Anmeldenummer: DE9400219
(87) Internationale Veröffentlichungsnummer: WO9421901

(56) Entgegenhaltungen:
- DE-A- 4 100 397
- DE-A- 4 122 787
- DE-C- 2 643 739
- GB-A- 1 373 826

## Beschreibung

Die vorliegende Erfindung betrifft ein Verfahren zur Überprüfung der Konvertierungsfähigkeit eines Katalysators nach dem Oberbegriff des Patentanspruchs 1.

Zur Umwandlung von schädlichen Bestandteilen in Abgasen von Brennkraftmaschinen werden Katalysatoren eingesetzt, die die in den Abgasen enthaltenen Kohlenwasserstoffe, das Kohlenmonoxid und die Stickstoffe in gesundheitlich unbedenkliche Verbindungen konvertieren. Die Katalysatoren sind im Betrieb harten Bedingungen wie hohen Temperaturen und Erschütterungen ausgesetzt, so daß deren Lebensdauer begrenzt ist. Dies kann während der Lebensdauer eines Kraftfahrzeugs zu einer Verringerung des Konvertierungsgrades des Katalysators fübren, was einen Austausch des Katalysators erfordert.

Da die gesetzlichen Abgasvorschriften jedoch während des gesamten Betriebseinsatzes stets erfüllt sein müssen, ist eine Funktionsüberwachung des Katalysators erforderlich. Dabei kann das Überwachungssystem dem Fahrer durch ein optisches oder akustisches Signal anzeigen, wenn der Katalysator nicht mehr einwandfrei arbeitet.

Durch die DE-PS 26 43 739 ist ein Verfahren zur Überwachung der Aktivität von Katalysatoren für die Abgasreinigung bekannt, bei dem zwei Temperaturfühler vorgesehen sind. Ein Temperaturfühler ist im Katalysator angeordnet, der andere stromaufwärts kurz vor dem Katalysator. Dieses bekannte Verfahren nützt die Tatsache aus, daß bei ordnungsgemäß arbeitendem Katalysator aufgrund von exothermen Reaktionen im Katalysator eine Temperaturerhöhung innerhalb des Systems stattfindet, wobei die am Katalysator gemessene Wärmetönung ein Maß für das Arbeiten des Katalysators ist.

Weiterhin ist durch die DE-OS 41 00 397 ein Verfahren und eine Anordnung zur Überwachung des Konvertierungsgrades eines Katalysators bekannt, bei dem die Temperaturdifferenz der Temperaturen vor und hinter dem Katalysator erfaßt und ausgewertet wird, die in einer Schubphase der Brennkraftmaschine bei Erzeugung eines Zündaussetzers und Zuführung einer vorgegebenen Kraftstoff-Luft-Gemischmenge auftreten.

Es ist Aufgabe der vorliegenden Erfindung, ein Verfahren zur Überprüfung bzw. Überwachung der Konvertierungsfähigkeit eines Katalysators vorzustellen, bei dem eine Überprüfung bzw. Überwachung der Funktion des Katalysators möglich ist, ohne in den Katalysator einzugreifen.

Diese Aufgabe wird erfindungsgemäß durch den Patentanspruch 1 gelöst. Eine vorteilhafte Weiterbildung ist im Unteranspruch 2 gekennzeichnet.

Besteht die Abgasanlage für eine Brennkraftmaschine beispielsweise aus einem getrennten Vor- und Hauptkatalysator, so kann für die Überprüfung der Funktionsfähigkeit des Vorkatalysators die Eigenschaft genutzt werden, daß der Vorkatalysator aufgrund seiner Masse und Beschichtung so ausgelegt ist, daß er in Betriebspunkten mit niedrigen Massendurchsätzen besonders stark konvertiert. Dies führt in diesen Betriebspunkten zu einer starken Erhöhung des Temperaturverlaufs über dem Katalysator. Wenn jedoch der Katalysator keine oder nur eine unzureichende Konvertierungsfähigkeit besitzt, ist die Temperatur vor und nach dem Katalysator nahezu gleich, so daß daraus geschlossen werden kann, daß der Katalysator, wenn überhaupt, nur unzureichend arbeitet.

Aufgrund des Übergangs von einem Betriebspunkt mit höherer Last und Drehzahl über eine Schubphase (Auskühlen durch Sauerstoff) in eine Leerlaufphase (Betriebspunkt mit niedriger Last und Drehzahl) sinkt grundsätzlich die Abgastemperatur. Der Katalysator besitzt bezüglich der Temperatur und Konvertierung eine gewisse Speicherwirkung, so daß dieses Absinken der Temperatur mit einem gewissen Zeitversatz nach dem Katalysator gemessen wird.

Das unterschiedliche Temperaturverhalten zwischen einem guten und einem defekten Katalysator ist nur sehr gering. Ein signifikanter Unterschied ist nur zu Beginn einer Leerlaufphase festzustellen, die sich direkt an eine Schubphase mit abgeschalteter Einspritzung anschließt, da sich hier durch den in der Schubphase zugeführten Sauerstoff beim Wiedereinsetzen der Einspritzung eine stark exotherme Reaktion einstellt. Weiterhin sollten aufgrund des geringen Unterschieds vor und während der einzelnen Messungen stabile und stets gleiche Bedingungen vorherrschen. Äußerst zuverlässige Kriterien zur Beurteilung der Konvertierungsfähigkeit eines Katalysators lassen sich dadurch erzielen, wenn jeweils mehrere Messungen in einem vorgegebenen Zeitintervall vorgenommen werden und daraus ein Mittelwert gebildet wird, der dann mit einem Grenzwert verglichen wird.

Das Verfahren ist besonders vorteilhaft auf den ersten Katalysator im Abgastrakt eines Kraftfahrzeugs anwendbar, der ein Vorkatalysator sein kann, da, wie Untersuchungen gezeigt haben, besonders zuverlässige Meßergebnisse nach dem erfindungsgemäßen Verfahren bei einem Katalysator erzielbar sind, dessen Größe ein gewisses Maß nicht übersteigt, da dieser dann besonders stark konvertiert.

Die Erfindung wird nun anhand von sieben Figuren näher erläutert, wobei als zu überprüfender Katalysator ein Vorkatalysator gewählt wurde. Es zeigen
Figur 1 den Temperaturverlauf vor und hinter dem Katalysator über der Zeit während einer Schub- und Leerlaufphase,
Figur 2 den Verlauf der Temperaturdifferenz über der Zeit,
Figur 3 den Zulässigkeitsbereich über der Zeit,
Figur 4 einen Grenzbereich für die Temperaturdifferenz vor und hinter dem Katalysator über der Zeit,
Figur 5 den Betrag des Temperaturgradienten über der Zeit,
Figur 6 einen Verlauf der Fahrzeuggeschwindigkeit über der Zeit, und
Figur 7 schematisch eine Brennkraftmaschine mit einem Abgastrakt.

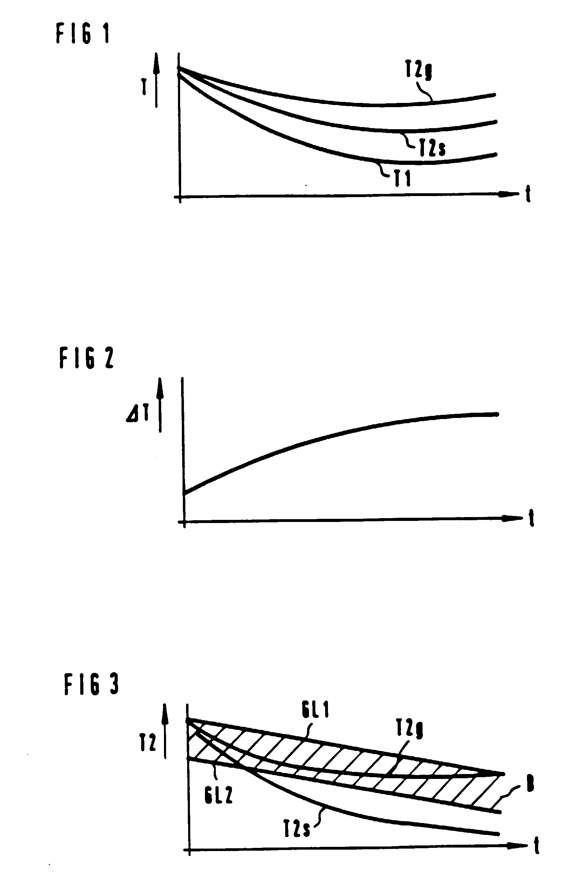

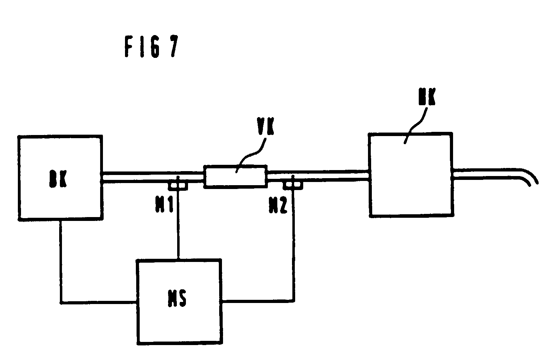

Die einzelnen Kriterien zur Überprüfung der Funktionsfähigkeit eines Katalysators, der hier beispielsweise ein Vorkatalysator ist, werden nun anhand von graphischen Darstellungen (Figur 1 bis 6) erläutert. Eine anschließende Figur 7 zeigt die Anordnung eines Vorkatalysators und eines Hauptkatalysatorã im Abgastrakt einer Brennkraftmaschine.

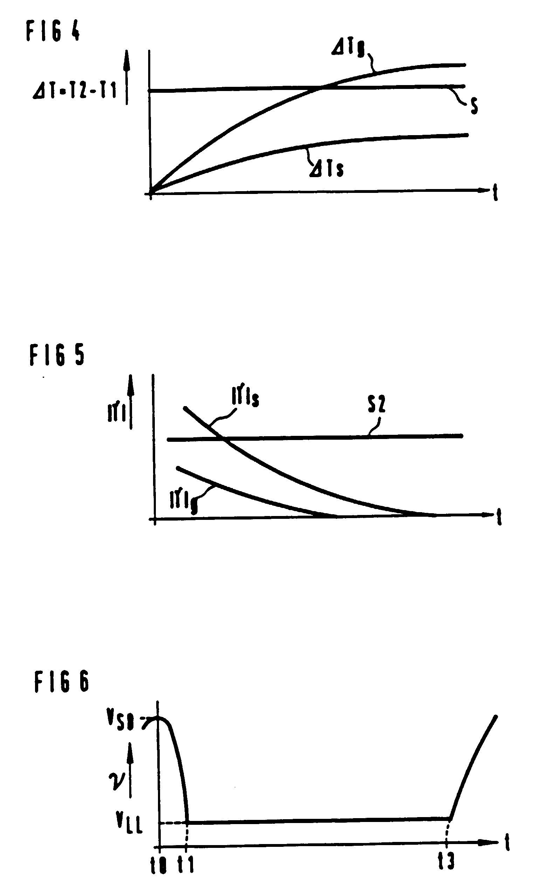

In Figur 6 ist die Geschwindigkeit v eines Fahrzeugs über der Zeit t dargestellt. Im Zeitpunkt to beträgt die Geschindigkeit v_{SB}, was den Beginn des Schubbetriebs andeuten soll. Im Zeitpunkt t1 befindet sich das Fahrzeug nach Abschluß der Schubphase im Leerlauf mit der Geschwindigkeit v_{LL}, die bis zum Zeitpunkt t3 andauern soll. In diesem Zeitraum zwischen t1 und t3 soll die Überprüfung des Katalysators stattfinden.

Abhängig von diesem Geschwindigkeitsverlauf, der häufig im Fahrzeugbetrieb vorkommt, wird nun der Vorkatalysator überprüft. Die in Figur 1 dargestellten Kurven zeigen dazu den Temperaturverlauf T1 stromaufwärts vor dem Vorkatalysator, T2g den Temperaturverlauf für einen ordnungsgemäß arbeitenden, guten Vorkatalysator und T2s für einen schlechten Vorkatalysator, wobei T2 die Tempertur ist, die stromabwärts des Vorkatalysators gemessen wird. Man sieht daraus, daß bei ordnungsgemäß arbeitendem Vorkatalysator die Temperaturdifferenz ΔT = T2g - T1 größer ist als bei einem schlechten Vorkatalysator.

Die Figur 2 zeigt den Verlauf der Temperaturdifferenz ΔT bei einem ordnungsgemäß arbeitendem Vorkatalysatcr, wobei die Werte mit vorgegebenen, in einem Rechner bzw. einer Motorsteuerung abgelegten Werten verglichen werden können, um die Funktionsfähigkeit des Vorkatalysators zu beurteilen.

In Figur 3 ist die Temperatur T2 über der Zeit t aufgetragen. Weiterhin ist ein Bereich B zwischen zwei Grenzlinien GL1, GL2 dargestellt. Liegen nun die Meßwerte T2g für T2 innerhalb dieses Bereichs B, so arbeitet der Vorkatalysator ordnungsgemäß. Wenn hingegen die Meßwerte für T2 (Kurve T2s) den Bereich B verlassen, so ist der Vorkatalysator defekt.

Eine weitere Möglichkeit zur Überprüfung des Vorkatalysators besteht in der Auswertung der Temperaturdifferenz ΔT = T2 - T1 unter Vorgabe einer bestimmten Schwelle S (Figur 4). Übersteigt die Temperaturdifferenz ΔTg die Schwelle S in der Überprüfungsphase, so wird auf einen ordnungsgemäß arbeitenden Vorkatalysator erkannt. Liegt der Wert für die Temperaturdifferenz ΔTs unterhalb dieser Schwelle S, so ist der Vorkatalysator defekt.

Die in Figur 5 dargestellten Kurven zeigen den Betrag des Temperaturgradienten |Ṫ| der Temperatur nach dem Katalysator über der Zeit. Die Kurve |Ṫ|g zeigt den Verlauf des Temperaturgradienten über der Zeit für einen ordnungsgemäß arbeitenden, guten Vorkatalysator, die Kurve |Ṫ|s den Verlauf für einen schlechten Vorkatalysator. Aufgrund des verminderten Abgasmassendurchsatzes in der Schub- und Leerlaufphase sinkt die Temperatur vor dem Vorkatalysator ab. Da ein schlechter Katalysator nur noch geringe Konvertierungseigenschaften besitzt, entspricht die Temperatur nach dem Vorkatalysator nahezu der Temperatur vor dem Vorkatalysator, d.h. sie fällt ebenso schnell ab. In einem gut konvertierenden Katalysator finden dagegen im Überprüfungszeitraum starke exotherme Reaktionen statt, wodurch die Temperatur nach dem Vorkatalysator nur wenig absinkt. Liegt der Betrag des Temperaturgradienten nach dem Katalysator innerhalb der Überprüfungsdauer über einer in einem Motorsteuergerät abgelegten Schwelle S2, wird der Vorkatalysator als schlecht detektiert.

In Figur 7 ist schematisch die Anordnung der Abgasreinigung sowie eine Brennkraftmaschine dargestellt. Die Brennkraftmaschine BK weist in ihrem Abgastrakt einen Vorkatalysator VK sowie einen sich daran anschließenden Hauptkatalysator HK auf. Weiterhin ist eine Motorsteuerung MS angedeutet, an der die Meßstellen M1, M2 vor und hinter dem Vorkatalysator angeschlossen sind.

Auf die Meßstelle T1 kann in bestimmten Fällen verzichtet werden, wenn in einem Rechner der Temperaturverlauf vor dem Vorkatalysator mit Hilfe eines Abgastemperaturmodells berechnet wird, das als Eingangsgrößen die Drehzahl und die Last besitzt.

Die Überprüfung wird im allgemeinen einmal pro Motorlauf durchgeführt.

## Patentansprüche

1. Verfahren zur Überprüfung der Konvertierung eines Katalysators in Kraftfahrzeugen mit Brennkraftmaschinen mittels einer Temperaturmessung im Abgastrakt vor und/oder hinter dem Katalysator,
**dadurch gekennzeichnet**,
daß die Überprüfung nach vorhergehendem Schubbetrieb des Kraftfahrzeugs in einer sich anschließenden, für die Überprüfung ausreichend langen Leerlaufphase durchgeführt wird, wobei der Katalysator in Ordnung ist, wenn mindestens eines der folgenden Kriterien zutrifft:
a)die Differenz der Temperaturen vor und nach dem Katalysator ist größer als ein Referenzwert,
b)die Temperatur, die stromabwärts des Katalysators nach dem Beginn der Überprüfung gemessen wird, liegt während der Zeitdauer der Überprüfung in einem vorgegebenen Bereich,
c)der Betrag des Temperaturgradienten für die Temperatur nach dem Katalysator ist kleiner ist als der Betrag des Temperaturgradienten für die Temperatur vor dem Katalysator und liegt insbesondere unter einem Schwellwert (S2).

2. Verfahren nach Anspruch 1,
**dadurch gekennzeichnet**,
daß in den Fällen a) und c) die Messung der Abgastemperatur vor dem Katalysator durch ein Abgastemperaturmodell ersetzt wird.

## Claims

1. Method for checking the conversion of a catalyzer in motor vehicles with internal combustion engines by means of a temperature measurement in the exhaust duct upstream and/or downstream of the catalyzer, characterized in that checking is carried out after prior overrun operation of the motor vehicle in a following idling phase of sufficient length for checking, the catalyzer being operative if at least one of the following criteria applies:
a) the difference between the temperatures upstream and downstream of the catalyzer is greater than a reference value,
b) the temperature which is measured downstream of the catalyzer following the beginning of checking is in a predetermined range for the duration of checking,
c) the magnitude of the temperature gradient for the temperature downstream of the catalyzer is smaller than the magnitude of the temperature gradient for the temperature upstream of the catalyzer and is, in particular, below a threshold value (S2).

2. Method according to Claim 1, characterized in that in cases a) and c) the measurement of the exhaust-gas temperature upstream of the catalyzer is replaced by an exhaust-gas temperature model.

## Revendications

1. Procédé de contrôle de la conversion d'un catalyseur dans des véhicules automobiles à moteurs à combustion interne au moyen d'une mesure de la température dans la ligne d'échappement en amont et/ou en aval du catalyseur, caractérisé en ce que le contrôle est effectué à la suite d'un régime de poussée du véhicule automobile, dans une phase de ralenti consécutive suffisamment longue pour réaliser le contrôle, le catalyseur étant réglementaire si au moins l'un des critères suivants s'applique :
a) la différence des températures en amont et en aval du catalyseur est supérieure à une valeur de référence,
b) la température mesurée en aval du catalyseur après le début du contrôle est située pendant le temps du contrôle dans une zone prédéfinie,
c) la valeur du gradient de température de la température en aval du catalyseur est inférieure à la valeur du gradient de température de la température en amont du catalyseur et se situe en particulier au-dessous d'une valeur seuil (S2).

2. Procédé selon la revendication 1, caractérisé en ce que dans les cas a) et c) la mesure de la température des gaz d'échappement en amont du catalyseur est remplacée par un modèle de température des gaz d'échappement.
